# EUROPÄISCHE PATENTSCHRIFT

(11) **EP 3 516 186 B1**
(45) Veröffentlichungstag und Bekanntmachung des Hinweises auf die Patenterteilung: **14.04.2021**
(21) Anmeldenummer: 17739873.2
(22) Anmeldetag: 13.07.2017
(51) Int. Cl.: F02B 37/007, F02B 37/22, F02B 37/12, F04D 27/02, F02B 37/00

(54) **BRENNKRAFTMASCHINE**
INTERNAL COMBUSTION ENGINE
MOTEUR À COMBUSTION INTERNE

(30) Priorität: 23.09.2016 DE 102016011551
(43) Veröffentlichungstag der Anmeldung: 31.07.2019
(73) Patentinhaber: MTU Friedrichshafen GmbH, 88045 Friedrichshafen (DE)
(72) Erfinder: HOHNER, Andreas, 78315 Radolfzell (DE); RUNDEL, Konstantin, 88356 Ostrach (DE)
(74) Vertreter: Kordel, Mattias
(86) Internationale Anmeldenummer: PCT/EP2017/000839
(87) Internationale Veröffentlichungsnummer: WO 2018/054508

(56) Entgegenhaltungen:
- DE-A1- 3 002 474
- US-A- 4 560 319
- US-A1- 2011 146 634
- US-A1- 2011 197 593
- US-A1- 2015 308 442

## Beschreibung

Die vorliegende Erfindung betrifft eine Brennkraftmaschine gemäß dem Oberbegriff von Anspruch 1.

Im Stand der Technik sind gattungsgemäße Brennkraftmaschinen bekannt, bei welchen zur Steigerung des Drehmoments, insbesondere aufgeladener Dieselmotoren, die Registerschaltung eingesetzt wird, z.B. aus der Druckschrift DE 198 16 840 C2. Hierbei wird mit steigender Leistung zusätzlich zum Basis-Abgasturbolader (Basislader) ein weiterer Abgasturbolader (Schaltlader) aktiviert. Beim Zuschalten des weiteren Abgasturboladers kann es betriebspunktabhängig dazu kommen, dass die Drehzahl des beschleunigten Schaltladers die Drehzahl des Basisladers kurzzeitig übersteigt. Durch den Unterdruck im Klappengehäuse stromauf des hochlaufenden Schaltladers öffnet sich die Luftklappe im Ladeluftweg des Schaltladers. Da die Drehzahl des Schaltladers zu diesem Zeitpunkt über jener des Basisladers liegt, ist der Förderstrom über den Schaltlader bei gleichem Druckgefälle höher als der Förderstrom des Basisladers. Durch diese Unsymmetrie liegt der Betriebspunkt des Basisladers jenseits der Pumpgrenze, so dass es direkt nach dem Schaltvorgang zu heftigem Laderpumpen kommen kann.

Aus der deutschen Offenlegungsschrift DE 30 02 474 A1 geht eine Kolben-Brennkraftmaschine mit Aufladung durch mindestens zwei ein- oder zweistufige Abgasturbolader hervor. Die Abgasturbolader können gemeinsam und parallelgeschaltet die Zylinder der Brennkraftmaschine mit Ladeluft versorgen. Mindestens einer der Abgasturbolader ist zur Erhöhung des Ladedruckes bei kleiner zur Verfügung stehender Abgasmenge durch Absperren seiner Abgaszuleitung abschaltbar, wobei eine Absperreinrichtung für die Ladeluft in der Saugleitung des Verdichters des abschaltbaren Turboladers vorgesehen ist. Auf die Absperreinrichtung wird eine Kraft im Öffnungssinne wirkt, und die bei abgeschaltetem Abgasturbolader durch den Druck in der Ladeluftleitung der Kolben-Brennkraftmaschine geschlossen gehalten wird. Die Absperreinrichtung wird beim Zuschalten des Abgasturboladers durch den vom hochlaufenden Verdichter in seiner Saugleitung erzeugten Unterdruck gemeinsam mit der auf sie wirkenden Kraft geöffnet und beim Abschalten des Abgasturboladers durch eine entgegengesetzt gerichtete Hilfskraft wieder geschlossen.

Ausgehend hiervon liegt der vorliegenden Erfindung die Aufgabe zugrunde, eine Brennkraftmaschine der vorgenannten Art bereitzustellen, welche die Nachteile des Standes der Technik überwindet.

Diese Aufgabe wird durch eine Brennkraftmaschine mit den Merkmalen des Anspruchs 1 gelöst.

Vorteilhafte Weiterbildungen und Ausführungsformen sind in den weiteren Ansprüchen angegeben.

Vorgeschlagen wird erfindungsgemäß eine Brennkraftmaschine, insbesondere in Form einer Kolbenbrennkraftmaschine. Die Brennkraftmaschine ist vorzugsweise als Selbstzünder, z.B. als Dieselmotor bereitgestellt, insbesondere als Großmotor, zum Beispiel für ein Kraftfahrzeug wie etwa ein Schiff, eine Lok oder ein Nutz- oder Sonderfahrzeug. Daneben kann die Brennkraftmaschine zum Beispiel für eine stationäre Einrichtung vorgesehen sein, z.B. für ein Blockheizkraftwerk, ein (Not-)Stromaggregat, z.B. auch für Industrieanwendungen.

Die Brennkraftmaschine weist - wenigstens zwei - parallel arbeitende Abgasturbolader in Registerschaltung auf, von welchen einer über eine Ladeluftweg-Absperreinrichtung mit einem Ladeluftweg-Absperrelement und über eine Abgasweg-Absperreinrichtung zu- und abschaltbar ist, d.h. ein Schaltlader, und ein anderer als Basislader arbeitet. Der Schaltlader kann bedarfsweise bzw. betriebspunktabhängig zugeschaltet oder abgeschaltet werden, insbesondere für den Volllastbetrieb der Brennkraftmaschine, während der wenigstens eine weitere Abgasturbolader, d.h. ein Basislader, vorzugsweise auch im Teillastbetrieb arbeitet. Für ein Zuschalten des Schaltladers kann die Abgasweg-Absperreinrichtung, zum Beispiel eine Klappe oder ein Ventil, im Abgasweg zur Turbine des Schaltladers geöffnet werden, so dass die Turbine des Schaltladers hochläuft, mithin auch dessen Verdichter, für ein Abschalten des Schaltladers kann die Abgasweg-Absperreinrichtung sodann wieder in Sperrstellung gesteuert werden.

Einhergehend mit dem Hochlaufen der Turbine des Schaltladers (im Rahmen des Öffnens der Abgasweg-Absperreinrichtung) kann über das Ladeluftweg-Absperrelement der Ladeluftweg-Absperreinrichtung der Ladeluftweg zu dem Verdichter des Schaltladers freigegeben werden, d.h. zu dessen Anströmung, womit der Schaltlader in den ladeluftverdichtenden Betriebszustand gelangt, das heißt vollends zugeschaltet ist.

Die Ladeluftweg-Absperreinrichtung ist zur Einstellung bzw. Darstellung einer definierten bzw. vorbestimmten Bewegungscharakteristik des Ladeluftweg-Absperrelements eingerichtet, welche Bewegungscharakteristik eine relativ längere Öffnungsstellungs-Einnahmedauer und eine relativ kürzere Schließstellungs-Einnahmedauer des Ladeluftweg-Absperrelements aufweist (für ein Öffnen bzw. Schließen eines der Ladeluftweg-Absperreinrichtung bzw. dem Ladeluftweg-Absperrelement zugeordneten Ladeluftwegs). Als Öffnungsstellungs-Einnahmedauer bzw. Schließstellungs-Einnahmedauer ist hierbei im Rahmen der vorliegenden Erfindung die jeweilige Dauer bezeichnet, welche das Ladeluftweg-Absperrelement mit der eingestellten, vorbestimmten Bewegungscharakteristik benötigt, um von der Schließstellung in die vollgeöffnete Stellung bzw. von der vollgeöffneten Stellung in die Schließstellung zu gelangen.

Erfindungsgemäß ist die Ladeluftweg-Absperreinrichtung eingerichtet, ein luftdruckgefällebasiertes Einnehmen einer Öffnungsstellung des Ladeluftweg-Absperrelements aktiv zu verzögern. Insbesondere bei erfindungsgemäßen Lösungen, bei welchen das Ladeluftweg-Absperrelement unterdruckbasiert (luftdruckgefällebasiert) aufgesaugt bzw. öffnungsunterstützt wird, kann ein solch langsames Öffnen durch aktive Verzögerung im Rahmen einer Öffnungssteuerung mittels der hierbei geeignet eingerichteten Ladeluftweg-Absperreinrichtung erfolgen.

Erfindungsgemäß ist vorgesehen, dass das Ladeluftweg-Absperrelement als Luftklappe ausgebildet ist.

Das Ladeluftweg-Absperrelement erfährt mit Öffnen der Abgasklappe bzw. Anlaufen des Verdichterrads des Schaltladers ein Druckgefälle bzw. einen Unterdruck, welches bzw. welcher ein Öffnen der Luftklappe verursacht.

Durch die Erfindung gelingt es somit auf vorteilhaft einfache Weise, ein Laderpumpen zu vermeiden, d.h. durch Einstellung einer vorbestimmten Bewegungscharakteristik des Ladeluftweg-Absperrelements, welche ein gezielt langsames Öffnen desselben vorsieht. Durch das mit der vorbestimmten Bewegungscharakteristik eingestellte langsame Öffnen kann vorteilhaft vermieden werden, dass der Förderstrom des Basisladers zu schnell und zu stark einbricht, so dass der Basislader bei einem Zuschaltvorgang vorteilhaft immer unterhalb der Pumpgrenze betrieben werden kann.

In Weiterbildung der Erfindung kann die Brennkraftmaschine ferner so ausgestaltet sein, dass die Ladeluftweg-Absperreinrichtung eingerichtet ist, im Rahmen der definierten Bewegungscharakteristik eine (Brennkraftmaschinen-)betriebspunktabhängige Öffnungscharakteristik des Ladeluftweg-Absperrelements einzustellen, d.h. betriebspunktabhängig unterschiedlich. Hierbei kann die Ladeluftweg-Absperreinrichtung z.B. eine Kontrolleinrichtung umfassen oder mit einer solchen zusammenwirken, zum Beispiel gebildet durch eine ECU, und vorzugsweise eine software- und/oder sensorbasierte Steuerung des Ladeluftweg-Absperrelements ermöglichen (welche insoweit insbesondere Motorbetriebsdaten berücksichtigt). Insbesondere mit solchen Ausführungsformen kann zum Beispiel vorgesehen sein, neben einem Öffnen mit langer Öffnungsstellungs-Einnahmedauer und einem demgegenüber schnelleren Schließen des Ladeluftweg-Absperrelements auch ein Öffnen mit kürzerer Öffnungsstellungs-Einnahmedauer zu ermöglichen, d.h., wenn dies betriebspunktabhängig vorteilhaft ist. Hierdurch kann der Zuschaltvorgang des Schaltladers verkürzt werden. Eine derart ausgestaltete Ladeluftweg-Absperreinrichtung ist insoweit eingerichtet, im Rahmen der definierten Bewegungscharakterisitk eine Öffnungscharakteristik mit einer relativ schnelleren und auch mit einer relativ langsameren Öffnungsstellungs-Einnahmedauer des Ladeluftweg-Absperrelements einzustellen bzw. einstellen zu können.

Gleichsam vorteilhaft kann eine Ladeluftweg-Absperreinrichtung mit der erfindungsgemäßen Brennkraftmaschine auch eingerichtet sein, wenigstens eine definierte Teilöffnungsstellung des Ladeluftweg-Absperrelements einstellen und über eine Dauer halten zu können, d.h. diskrete Zwischenstellungen zwischen der vollgeöffneten Stellung und der Schließstellung. Eine solche Teilöffnungsstellung kann z.B. unabhängig von einer Bewegungscharakteristik des Ladeluftweg-Absperrelements mit der relativ längeren Öffnungsstellungs-Einnahmedauer und der relativ kürzeren Schließstellungs-Einnahmedauer oder im Rahmen einer solchen gesteuert werden, insbesondere mit einem mehrstufigen Öffnen des Ladeluftweg-Absperrelements. Bevorzugt gehen Ausgestaltungen der Brennkraftmaschine insoweit dahin, mit der Ladeluftweg-Absperreinrichtung sowohl die Öffnungsgeschwindigkeit als auch die Position des Ladeluftweg-Absperrelements über einen Öffnungs- oder auch Schließvorgang, insbesondere auch über einen Teilöffnungsvorgang, aktiv beeinflussen bzw. steuern zu können. Vorzugsweise erfolgt auch eine solche Steuerung (brennkraftmaschinen-)betriebspunktabhängig.

Gemäß einer bevorzugten Ausführungsform der Brennkraftmaschine kann die Ladeluftweg-Absperreinrichtung zu einer hydraulischen Steuerung des Ladeluftweg-Absperrelements eingerichtet sein. Hierbei kann - einhergehend mit einer vorteilhaft äußerst einfachen Ausgestaltung - die Ladeluftweg-Absperreinrichtung einen kleineren Hydraulikfluid-Durchströmquerschnitt für das Öffnen des Ladeluftweg-Absperrelements mit relativ längerer Öffnungsstellungs-Einnahmedauer bereitstellen (insbesondere für ein Abströmen von Hydraulikfluid aus einem Steuerzylinder der Steuereinrichtung (welcher mit dem Ladeluftweg-Absperrelement in Wirkverbindung steht)) und einen größeren Hydraulikfluid-Durchströmquerschnitt für das Schließen des Ladeluftweg-Absperrelements mit relativ kürzerer Schließstellungs-Einnahmedauer bereitstellen (insbesondere für ein Zuströmen von Hydraulikfluid an den Steuerzylinder der Steuereinrichtung).

Konkrete Ausgestaltungen dieser Art gehen zum Beispiel dahin, dass die Ladeluftweg-Absperreinrichtung den kleineren Hydraulikfluid-Durchströmquerschnitt und den größeren Hydraulikfluid-Durchströmquerschnitt in einer Hydraulikfluid-Strömungsverbindung zu einem - wie vorstehend erwähnten - Steuerzylinder des Ladeluftweg-Absperrelements bildet. Hierbei kann der kleinere Durchströmquerschnitt insbesondere mittels einer - in einer Abströmrichtung zu durchströmenden - Drosselvorrichtung gebildet sein, der größere Durchströmquerschnitt mittels einer Bypassleitung zu der Drosselvorrichtung mit darin - in Zuströmrichtung zum Steuerzylinder durchströmbar - aufgenommenem Rückschlagventil. Eine solche Funktionalität kann auf einfache Weise in einer Einheit, z.B. mit zwei (konzentrisch) angeordneten Kegelventilen, ausgebildet werden, wobei das innere Ventil die Drosselstelle trägt. Weiterhin vorteilhaft kann mit einer wie vorstehend erörterten Lösung daneben auch vorgesehen sein, den kleineren Durchströmquerschnitt variabel wählen zu können, so dass unterschiedliche Öffnungsstellungs-Einnahmedauern des Ladeluftweg-Absperrelements einstellbar sind, zum Beispiel durch Verwendung einer einstellbaren Drosselvorrichtung oder Blende.

Als Hydraulikfluid für die Ladeluftweg-Absperreinrichtung kann zum Beispiel Öl, insbesondere Motoröl dienen, welches in einem Triebwerks- bzw. Brennkraftmaschinen-Ölkreislauf mit einem Öldruck beaufschlagt zirkuliert.

Alternative Ausgestaltungen der Brennkraftmaschine, welche ebenfalls von einer hydraulischen Ladeluftweg-Absperreinrichtung Gebrauch machen, können vorsehen, dass die Ladeluftweg-Absperreinrichtung eingerichtet ist, das Hydraulikfluid wahlweise über einen kleineren Hydraulikfluid-Durchströmquerschnitt (mit Drosselwirkung) oder einen größeren Hydraulikfluid-Durchströmquerschnitt (insbesondere ohne Drosselwirkung) für einen relativ langsameren Öffnungsvorgang bzw. einen relativ schnelleren Öffnungsvorgang des Ladeluftweg-Absperrelements zu führen, insbesondere seitens eines wie oben erörterten Steuerzylinders abzuführen. Hierbei kann die Ladeluftweg-Absperreinrichtung ein Wegeventil aufweisen, vorzugsweise ein 3/2-Wege-Ventil, über welches Hydraulikfluid (seitens des Steuerzylinders für das Ladeluftweg-Absperrelement) in Abhängigkeit der Ventilstellung des Wegeventils über den kleineren Durchströmquerschnitt, einhergehend mit dem relativ langsameren Öffnungsvorgang (relativ längere Öffnungsstellungs-Einnahmedauer), oder über den größeren Durchströmquerschnitt, einhergehend mit dem relativ schnelleren Öffnungsvorgang (relativ kürzere Öffnungsstellungs-Einnahmedauer), absteuerbar ist. Auch hierdurch ergibt sich eine vorteilhaft erhöhte Flexibilität in den Möglichkeiten, den Schaltlader zuzuschalten, wobei wiederum auch das schnelle Schließen des Ladeluftweg-Absperrelements darstellbar ist.

Ebenfalls von der Erfindung mitumfasst sind Ausgestaltungen der Brennkraftmaschine, bei welchen die Ladeluftweg-Absperreinrichtung zu einem elektrischen Öffnen und Schließen des Ladeluftweg-Absperrelements mit der beabsichtigten Bewegungscharakteristik eingerichtet ist. Hierbei kann die Ladeluftweg-Absperreinrichtung einen elektrisch angesteuerten Steller aufweisen, welcher für ein Öffnen und Schließen des Ladeluftweg-Absperrelements, d.h. mit der definierten Bewegungscharakteristik, mit demselben in Wirkverbindung steht, insbesondere einen seitens einer Kontrolleinrichtung, z.B. einer ECU, der Brennkraftmaschine angesteuerten Steller. Bevorzugt können über einen solchen Steller unterschiedliche Öffnungsgeschwindigkeiten, mithin variable Öffnungszeiten, und/oder Positionen, z.B. wiederum Zwischenstellungen, des Ladeluftweg-Absperrelements im Rahmen von Öffnungsvorgängen eingestellt werden, insbesondere eine betriebspunktabhängige Öffnungscharakteristik. Eine Bewegungscharakteristik kann hierbei z.B. softwarebasiert, z.B. auch kennfeldbasiert, eingestellt werden.

In weiterer Ausgestaltung der Erfindung kann die Brennkraftmaschine z.B. eine Ladeluftweg-Absperreinrichtung umfassen, welche einen hydraulischen Steuerzylinder aufweist, welcher mit dem Ladeluftweg-Absperrelement zu dessen Steuerung in Wirkverbindung steht, wobei dem Steuerzylinder eine Positionssteuerung für dessen Kolben, insbesondere gebildet mit einem Proportionalventil sowie einer Wegmesseinrichtung zugeordnet ist, welche in Wirkverbund mit dem Steuerzylinder eine definierte Offensteuerung des Ladeluftweg-Absperrelements mit verschiedenen Öffnungsgeschwindigkeiten und Stellungen ermöglichen, insbesondere die Einstellung einer betriebspunktabhängigen Öffnungscharakteristik. Mithin können im Rahmen der Erfindung auch Lösungen mit hydraulischem Steuerprinzip eine Steuerung mit hoher Genauigkeit und Variabilität leisten.

Allgemein ist mit der Erfindung vorgesehen, dass mit der Ladeluftweg-Absperreinrichtung ein Verhältnis von Öffnungsstellungs-Einnahmedauer des Ladeluftweg-Absperrelements zu Schließstellungs-Einnahmedauer des Absperrelements im Bereich von 5:1 bis 20:1 einstellbar ist, vorzugsweise z.B. 10:1. Daneben ist die Brennkraftmaschine vorzugsweise allgemein so ausgestaltet, dass mit der Ladeluftweg-Absperreinrichtung eine Öffnungscharakteristik im Rahmen der eingestellten Bewegungscharakteristik darstellbar ist, bei welcher das Ladeluftweg-Absperrelement kontinuierlich bzw. stufenlos öffnet, insbesondere über den gesamten Öffnungsweg bzw. den gesamten Öffnungsvorgang bis zur Einnahme der vollgeöffneten Stellung.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen. Die einzelnen Merkmale können je einzeln für sich oder zu mehreren in verschiedener Kombination bei einer Variante der Erfindung verwirklicht sein.

Bevorzugte Ausführungsformen der Erfindung werden nachfolgend anhand der beigefügten Zeichnungen näher erläutert. Es zeigen:
- Fig. 1: exemplarisch eine schematische Ansicht gerichtet auf die Abgasturbolader einer Brennkraftmaschine sowie die Zuschaltanordnung für einen der Abgasturbolader gemäß einer möglichen Ausführungsform der Erfindung.
- Fig. 2: exemplarisch eine Ansicht analog zu Fig. 1 gemäß einer weiteren bevorzugten Ausführungsform der Erfindung.
- Fig. 3: exemplarisch eine Ansicht analog zu Fig. 1 und 2 gemäß noch einer weiteren bevorzugten Ausführungsform der Erfindung.
- Fig. 4: exemplarisch eine Ansicht analog zu den Figs. 1 bis 3 gemäß einer weiteren bevorzugten Ausführungsform der Erfindung.

In der nachfolgenden Beschreibung und den Zeichnungen entsprechen gleichen Bezugszeichen Elemente gleicher oder vergleichbarer Funktion.

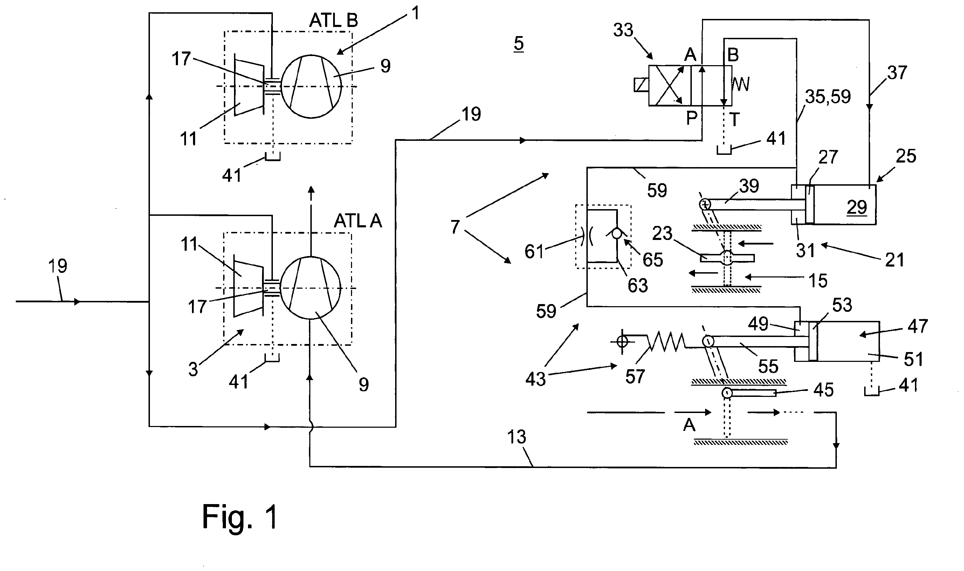

Fig. 1 zeigt exemplarisch eine Anordnung parallel arbeitender Abgasturbolader (ATL) 1 bzw. 3 einer erfindungsgemäßen Brennkraftmaschine 5, d.h. eines Basisladers 1 sowie eines zu- und abschaltbaren Abgastuboladers bzw. Schaltladers 3, sowie eine Zuschaltanordnung 7, über welche der Schaltlader 3 - im Rahmen einer Registerschaltung - zu- und abschaltbar ist (parallel zu dem Basislader 1).

Ein jeweiliger Abgasturbolader 1, 3 umfasst - in an sich hinlänglich bekannter Weise - einen Verdichterteil (Verdichterrad) 9 und einen Turbinenteil (Turbinenrad) 11. Der Verdichterteil 9 ist in einem Ladeluftstrang 13 der Brennkraftmaschine angeordnet (nur für den Schaltlader 3 exemplarisch in den Figuren veranschaulicht), der Turbinenteil 11 in einem Abgasstrang 15, d.h. ebenfalls in bekannter Weise.

Die Lagerung der Abgasturbolader 1, 3 bzw. deren Wellen 17 ist in einen Motorölkreis 19 der Brennkraftmaschine 5 einbezogen, welcher Motorölkreis bzw. Hydraulikkreis 19 mit dem darin geführten Motoröl insoweit auch das Hydraulikfluid für die Zuschaltanordnung 7 bereitstellt, über welche der Schaltlader 3 hydraulisch zu- und abschaltbar ist. Versorgt und druckbeaufschlagt wird der Hydraulikkreis 19 z.B. über eine motorgetriebene Ölpumpe der Brennkraftmaschine 5.

Die Zuschaltanordnung 7 weist zur Zu- und Abschaltung des Schaltladers 3 eine Abgasweg-Absperreinrichtung 21 mit einem Abgasweg-Absperrelement 23 auf, wobei das Abgasweg-Absperrelement 23 - als Flügelklappe gebildet - verschwenkbar im Abgasweg 15 angeordnet ist. Zur Steuerung des Abgasweg-Absperrelements 23 weist die Abgasweg-Absperreinrichtung 21 weiterhin einen hydraulisch betätigten Steuerzylinder 25 in Wirkverbindung mit dem Abgasweg-Absperrelement 23 auf, dessen zwei - durch einen (Zylinder-)Kolben 27 von einander getrennte - Zylinderkammern 29, 31 über ein 4/2-Wege-Ventil bzw. Steuerventil 33 im daran geführten Hydraulikkreis 19 (sowie entsprechende Leitungszweige 35, 37) in Abhängigkeit der Ventilstellung wechselweise be- oder entlastbar sind.

Mit Bezug auf die Darstellung in Fig. 1 ist der Kolben 27 des Steuerzylinders 25 in der gezeigten Stellung des Steuerventils 33 durch hydraulische Belastung der rechten (für ein Ausschieben zu belastenden) Zylinderkammer 29 und gleichzeitige Entlastung der linken (für ein Einrücken zu belastenden) Zylinderkammer 31 nach links ausgerückt, so dass das Abgasweg-Absperrelement 23 über den weiterhin mit dem Kolben 27 in Verbindung stehenden Kniehebel 39 in Offenstellung gedrängt ist. Wird das Ventil 33 hingegen in die weitere Stellung (nicht dargestellt) umgeschaltet, wird der Kolben 27 infolge einer nunmehr einsetzenden hydraulischen Belastung der linken Kammer 31 und einer gleichzeitig erfolgenden Entlastung der rechten Kammer 29 hin zur rechten Kammer 29 eingerückt, mithin das Abgasweg-Absperrelement 23 über den mit dem Kolben 27 mitverlagerten Kniehebel 39 in Sperrstellung geschwenkt. Hierdurch wird die Abgas-Anströmung der Turbine 11 des Schaltladers 3 unterbunden, d.h. der Schaltlader 3 wird abgeschaltet. Im Rahmen einer Entlastung kann das Hydraulikfluid zum Beispiel an ein Reservoir wie etwa einen Tank 41 abgesteuert werden.

Wie Fig. 1 weiter veranschaulicht, umfasst die Zuschaltanordnung 7 weiterhin eine Ladeluftweg-Absperreinrichtung 43 mit einem Ladeluftweg-Absperrelement 45. Die Ladeluftweg-Absperreinrichtung 43 ist ebenfalls mittels eines hydraulischen Steuerzylinders 47 gebildet, wobei auch dessen zwei Zylinderkammern 49, 51 durch einen (Zylinder-)Kolben 53 volumenvariabel voneinander getrennt sind. Im Unterschied zu dem Steuerzylinder 25 der Abgasweg-Absperreinrichtung 21 ist der Steuerzylinder 47 jedoch nur einseitig hydraulisch ansteuerbar, d.h. dessen Kammer 49.

Über einen Kniehebel 55 steht der Kolben 53 wiederum in Wirkverbindung mit dem Ladeluftweg-Absperrelement 45, welches vorliegend als Luftklappe ausgestaltet ist, das heißt zwischen einer Offenstellung und einer Schließstellung (gestrichelt eingezeichnet) verschwenkbar. Der Kniehebel 55 bzw. die Kolbenstange hiervon ist weiterhin mit einer Übertotpunktfeder 57 beaufschlagt, um ein zuverlässiges Öffnen des Ladeluftweg-Absperrelements 45 zu gewährleisten.

Die im Ladeluftweg 13 stromauf des Verdichters 9 des Schaltladers 3 angeordnete Luftklappe 45 wird - Brennkraftmaschinenbetrieb vorausgesetzt - anströmseitig mit Ansaugluft (seitens eines Luftfilters) beaufschlagt, Pfeil A, und erfährt mit Öffnen der Abgasklappe 23 bzw. Anlaufen des Verdichterrads des Schaltladers 3 ein Druckgefälle bzw. einen Unterdruck, welches bzw. welcher ein Öffnen der Luftklappe 45 verursacht. Für die Einnahme der Offenstellung, wie diese in Fig. 1 veranschaulicht ist, wird nunmehr der einseitig über die Kammer 49 hydraulisch be- und entlastbare Steuerzylinder 47 entlastet (bzw. dessen Kammer 49), das heißt mit Einnahme der gezeigten Ventilstellung des Steuerventils 33 (welches insoweit auch funktionale Komponente der Ladeluftweg-Absperreinrichtung 43 ist), insofern einhergehend mit einem Öffnen auch der Abgasklappe 23. Im Zuge der Entlastung rückt der Kolben 53 unter Mitverlagerung des Kniehebels 55 aus (wobei das Ausrücken einerseits durch die Federlast 57 und andererseits durch das Druckgefälle an der Luftklappe 45 verursacht wird) und die Luftklappe 45 kann öffnen.

Eine hydraulische Ansteuerung des Steuerzylinders 47 erfolgt hierbei über die Hydraulikfluid-Strömungsverbindung bzw. Steuerleitung 59, welche ausgehend von der Steuerzylinderkammer 49 an das Steuerventil 33 geführt ist, bei einer Entlastung - in der gezeigten Ventilstellung - über das Steuerventil 33 weiterhin hin zur Niederdruckseite, d.h. an den Tank 41. Für die Einnahme der Schließstellung der Luftklappe 45 wird - mit Umsteuern des Steuerventils 33 und insoweit wiederum mit Einnahme der Schließstellung auch der Abgasklappe 23 - die Kammer 49 des Steuerzylinders 47 wieder belastet (über die Leitung 59), wodurch der Kolben 53 wieder eingerückt und die Luftklappe 45 via den Kniehebel 55 in Schließstellung mitgenommen wird.

Erfindungsgemäß ist die Ladeluftweg-Absperreinrichtung 43 hierbei eingerichtet, eine definierte Bewegungscharakteristik des Ladeluftweg-Absperrelements 45 einzustellen bzw. darzustellen, welche eine relativ längere Öffnungsstellungs-Einnahmedauer und eine demgegenüber relativ kürzere Schließstellungs-Einnahmedauer des Ladeluftweg-Absperrelements 45 aufweist. Mit dieser Ausgestaltung kann Laderpumpen vorteilhaft wirksam vermieden werden, da hiermit bewirkt werden kann, dass der Schaltlader 3 seinen Durchsatz allmählich, nicht jedoch sprunghaft steigert, sodass der Basislader 1 seinen Volumenstrom für längere Zeit auf höherem Niveau halten kann.

Zur Einstellung bzw. Darstellung der erfindungsgemäßen, definierten Bewegungscharakteristik ist, wie auch Fig. 1 veranschaulicht, in der Steuerleitung 59 zum Steuerzylinder 47 der Ladeluftweg-Absperreinrichtung 43 eine Drosselvorrichtung 61 samt Bypass 63 gebildet, wobei der Bypass 63 weiterhin ein Rückschlagventil 65 aufweist. Mittels der Drosselvorrichtung 61 wird hierbei ein erster, relativ kleinerer durchströmbarer Querschnitt in der Strömungsverbindung 59 bereitgestellt, welcher bei Absteuerung von Hydraulikfluid seitens des Steuerzylinders 47 der Ladeluftweg-Absperreinrichtung 43 im Rahmen eines Öffnens der Luftklappe 45 zwangsweise durchströmt werden muss (da der Bypass 63 in Abströmrichtung durch das Rückschlagventil 65 versperrt ist). Derart wird die beabsichtigte lange Öffnungsstellungs-Einnahmedauer bzw. ein langsames Öffnen der Luftklappe 45 eingestellt, insoweit der Abfluss des Hydraulikfluids aktiv mittels der Drossel 61 verzögert wird, mithin die Verlagerung des Kolbens 53 samt Kniehebel 55 und weiterhin das Öffnen der Luftklappe 45.

Mit Schließen der Luftklappe 45, einhergehend mit Umschalten des Steuerventils 33 sowie der Anströmung des Steuerzylinders 47 mit Hydraulikfluid, öffnet das Rückschlagventil 65 im Bypass 63 und ein relativ größerer Strömungsquerschnitt wird in der Steuerleitung 59 freigegeben, so dass eine nahezu verzugslose Umsteuerung des Steuerzylinders 47 erfolgen kann, mithin das schnelle Schließen der Luftklappe 45 mit geringerer Schließstellungs-Einnahmedauer im Vergleich zur Öffnungsstellungs-Einnahmedauer. In vorteilhafter Weiterbildung dieser einfach und kostengünstig realisierbaren Ausgestaltung kann vorgesehen sein, die Drosselvorrichtung 61 mit einstellbarem Querschnitt auszubilden. Somit ist zudem eine Öffnungscharakteristik im Hinblick auf die Öffnungsstellungs-Einnahmedauer variabel einstellbar. Mit einer Ausgestaltung nach Fig. 1 kann weiterhin ein Sicherheitsventil vorgesehen werden, welches den Schaltlader 3 sicher vor Übertouren schützt, zum Beispiel bei einem Hydraulikfluiddruck entsprechend einem zulässigen Unterdruck vor dem Lader 3 öffnet (der zulässige Unterdruck entspricht insbesondere der Ladergrenzdrehzahl minus einer Sicherheitsmarge).

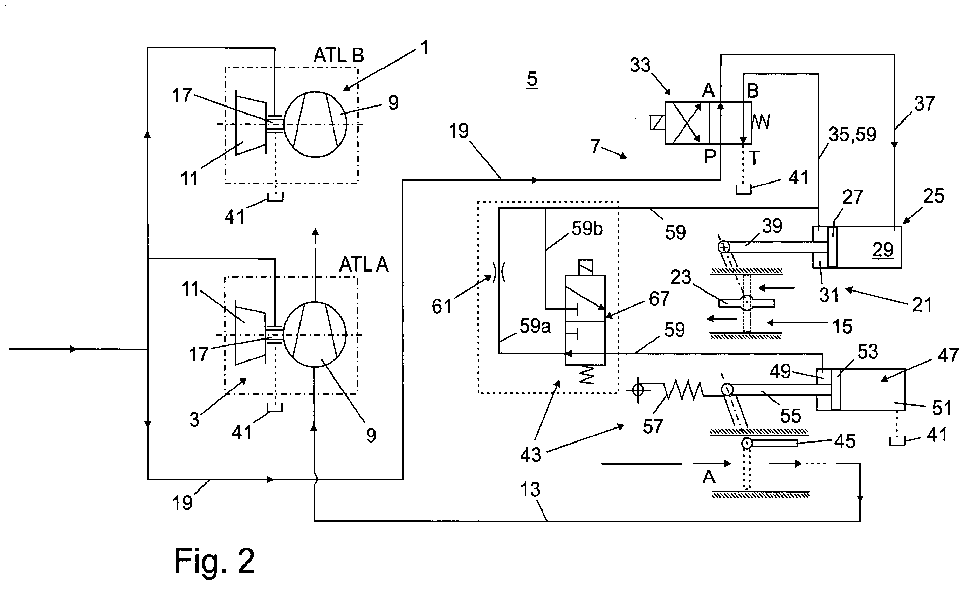

Fig. 2 zeigt nunmehr eine weitere Ausgestaltung einer erfindungsgemäßen Brennkraftmaschine 5, das heißt fokussiert auf die Zuschaltanordnung 7 sowie die Abgasturbolader 1 bzw. 3, bei welcher im Unterschied zur vorhergehend erörterten Ausführungsform die Ladeluftweg-Absperreinrichtung 43 eingerichtet ist, das Hydraulikfluid wahlweise über einen kleineren Hydraulikfluid-Durchströmquerschnitt oder einen größeren Hydraulikfluid-Durchströmquerschnitt für einen relativ langsameren Öffnungsvorgang (relativ längere Öffnungsstellung-Einnahmedauer) oder einen relativ schnelleren Öffungsvorgang (relativ kürzere Öffnungsstellungs-Einnahmedauer) des Ladeluftweg-Absperrelements 45 abführen zu können (wobei weiterhin auch das beabsichtigte schnelle Schließen ermöglicht ist).

Hierbei weist die Ladeluftweg-Absperreinrichtung 43 ein (Umschalt-)Ventil 67 auf, insbesondere ein 3/2-Wege-Ventil, über welches die Strömungsverbindung 59 des Steuerventils 33 mit dem Steuerzylinder 47 über einen ersten Pfadabschnitt 59a mit einem geringeren durchströmbaren Querschnitt schaltbar ist und über welches weiterhin die Strömungsverbindung 59 des Steuerventils 33 mit dem Steuerzylinder 47 über einen zweiten Pfadabschnitt 59b mit einem größeren durchströmbaren Querschnitt schaltbar ist. Zur Darstellung des geringeren durchströmbaren Querschnitts im ersten Pfadabschnitt 59a weist dieser wiederum ein Drosselelement 61 auf, während eine Durchströmung des zweiten Pfadabschnitts 59b, das heißt des größeren durchströmbaren Querschnitts, ungedrosselt erfolgen kann.

In der in Fig. 2 gezeigten Stellung der Ventile 33, 67 erfolgt eine Entlastung des Steuerzylinders 47 über den ersten Pfadabschnitt 59a, d.h. gedrosselt, so dass wiederum das beabsichtigte langsame Öffnen der Luftklappe 45 erzielt wird. Soll alternativ, insbesondere betriebspunktabhängig, ein demgegenüber schnelleres Öffnen erzielt werden, kann das Ventil 67 in die (nicht dargestellte) weitere Stellung geschaltet werden, so dass der Abfluss von Steuerfluid seitens des Steuerzylinders 47 ungedrosselt erfolgen kann. Diese Stellung des Ventils 67 kann sodann auch für ein schnelles Schließen vorgesehen werden, im Rahmen dessen lediglich das Steuerventil 33 umgeschaltet werden muss. Mit dieser Lösung kann zum Beispiel eine Öffnungscharakteristik mit einer relativ langen Öffnungsstellungs-Einnahmedauer dann eingestellt werden, wenn es zur Vermeidung des Laderpumpens notwendig ist, während in allen anderen Betriebspunkten ein schnelles Öffnen der Luftklappe 45 erfolgen, mithin ein kurzer Zuschaltvorgang des Schaltladers 3 erzielt werden kann. Im Rahmen dieser Ausgestaltung ist die Ladeluftweg-Absperreinrichtung 43 vorzugsweise für eine betriebsparameterbasierte Softwaresteuerung des Steuerventils 33 und des weiteren Ventils 67 eingerichtet.

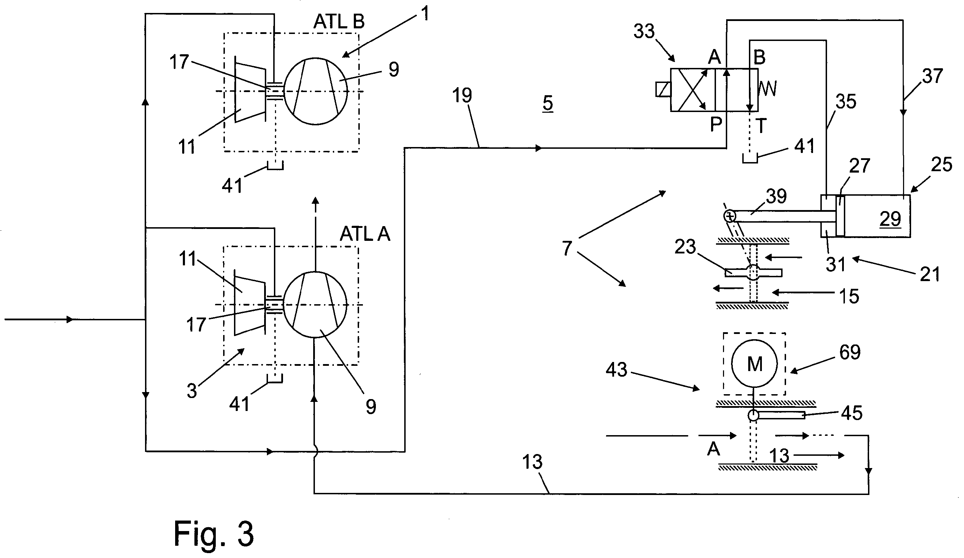

**Fig. 3** zeigt nunmehr eine weitere Ausgestaltung einer Brennkraftmaschine 5, wobei im Unterschied zu den vorhergehend beschriebenen Ausgestaltungen die Ladeluftweg-Absperreinrichtung 43 keine hydraulische sondern eine elektrische Steuerung des Ladeluftweg-Absperrelements 45 für dessen Steuerung mit der beabsichtigten Bewegungscharakteristik vorsieht.

Hierzu weist die Ladeluftweg-Absperreinrichtung 43 einen elektrischen Stellmotor bzw. einen Steller 69 auf, über welchen die Ladeluftklappe 45 offen- und zusteuerbar ist, insbesondere mit unterschiedlichen Öffnungszeiten. Weiterhin kann bei einer solchen Ausgestaltung vorgesehen werden, über den Steller 69 vorteilhaft auch Zwischenstellungen der Ladeluftklappe 45 zu steuern, das heißt teilgeöffnete Stellungen, oder zum Beispiel auch ein mehrstufiges Öffnungsprofil einzustellen, so dass sich eine nochmals gesteigerte Variabilität ergibt. Auch mit dieser Ausgestaltung wird vorzugsweise das Öffnen der Luftklappe 45 betriebspunktabhängig eingestellt, das heißt durch geeignete Implementierung von Steuerroutinen einer den Stellmotor 69 steuernden Steuersoftware der Ladeluftweg-Absperreinrichtung 43.

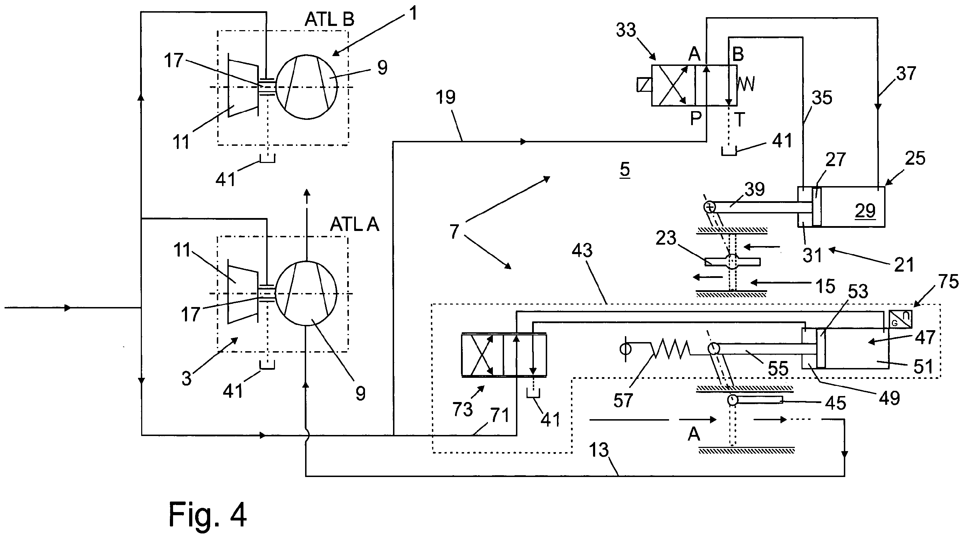

Anhand von **Fig. 4** wird nachfolgend noch eine weitere Ausgestaltung der Brennkraftmaschine 5 erörtert, bei welcher die Ladeluftweg-Absperreinrichtung 43 hydraulisch steuernd ebenfalls zu einer hochvariablen Einstellung einer beabsichtigten Öffnungscharakteristik befähigt ist. Die Ladeluftweg-Absperreinrichtung 43 nach Fig. 4 umfasst hierbei wiederum einen hydraulischen Steuerzylinder 47, welcher mit dem Ladeluftweg-Absperrelement 45 zu dessen Steuerung in Wirkverbindung steht. Im Unterschied zu den die Luftklappe 45 ebenfalls hydraulisch steuernden Ausgestaltungen nach Fig. 1 und 2, weist die Ladeluftweg-Absperreinrichtung 43 hierbei jedoch einen separat von der Steuerung der Abgasklappe gebildeten Hydrauliksteucrkreis 71 auf (welcher wiederum aus dem Ölkreislauf der Brennkraftmaschine 5 gespeist wird).

Dem Steuerzylinder 47, der bei dieser Ausgestaltung zwei hydraulisch ansteuerbare Kammern 49, 51 aufweist, ist bei dieser Ausgestaltung ein Proportionalventil 73, insbesondere ein 4/2-Wege-Proportionalventil, sowie eine Wegmesseinrichtung 75 zugeordnet, welche in Wirkverbund mit dem Steuerzylinder 47 eine definierte Offensteuerung des Ladeluftweg-Absperrelements 45 mit verschiedenen Öffnungsgeschwindigkeiten und Stellungen ermöglichen, insbesondere die Einstellung einer betriebspunktabhängigen Bewegungscharakteristik bzw. Öffnungscharakteristik. Bei einer solchen Ausgestaltung kann, insbesondere bei Ansteuerung des Proportionalventils 73 seitens einer ECU, das Ladeluftweg-Absperrelement 45 mit Zuschalten des Schaltladers 3 über einen definierten Vorgabeweg und/oder eine definierte Vorgabegeschwindigkeit des Steuerzylinders 47 geöffnet werden. Als Steuersignal kann zum Beispiel ein PWM (pulsweitenmoduliertes)-Signal verwendet werden. Mit einer solchen Ausgestaltung ist vorteilhaft auch ein mehrstufiges Öffnen realisierbar, z.B. mit oder zusätzlich zu der Bewegungscharakteristik mit der relativ langen Öffnungsstellungs-Einnahmedauer, wobei im Rahmen eines mehrstufigen Öffnens mit einer gezielt vorgegebenen Luftklappenposition der Förderstrom über den Verdichter 9 unabhängig von der Öffnungsgeschwindigkeit eingestellt werden kann.

Allgemein ist mit der Erfindung vorgesehen, mit der Ladeluftweg-Absperreinrichtung 43 eine Bewegungscharakteristik mit einem Verhältnis von Öffnungstellungs-Einnahmedauer des Ladeluftweg-Absperrelements 45 zu Schließstellungs-Einnahmedauer des Absperrelements 45 im Bereich von 5:1 bis 20:1 einzustellen. Insbesondere ist mit einer Ladeluftweg-Absperreinrichtung 43 nach der Erfindung regelmäßig auch eine Öffnungscharakteristik darstellbar, bei welcher das Ladeluftweg-Absperrelement 45 im Rahmen der eingestellten Bewegungscharakteristik öffnet, insbesondere über die gesamte Öffnungsstellungs-Einnahmedauer bzw. den gesamten Öffnungsweg.

Die Ladeluftweg-Absperreinrichtung 43 kann auch auf der Druckseite des Schaltladers 3 angeordnet sein.

### BEZUGSZEICHENLISTE

- 1: Abgasturbolader (Basislader)
- 3: Abgasturbolader (Schaltlader)
- 5: Brennkraftmaschine
- 7: Zuschaltanordnung
- 9: Verdichterteil
- 11: Turbinenteil
- 13: Ladeluftstrang
- 15: Abgasstrang
- 17: Welle
- 19: Hydraulikkreis
- 21: Abgasweg-Absperreinrichtung
- 23: Abgasweg-Absperrelement
- 25: Steuerzylinder (der Abgasweg-Absperreinrichtung)
- 27: Kolben
- 29: Kammer
- 31: Kammer
- 33: Steuerventil
- 35: Zweig
- 37: Zweig
- 39: Kniehebel
- 41: Reservoir
- 43: Ladeluftweg-Absperreinrichtung
- 45: Ladeluftweg-Absperrelement
- 47: Steuerzylinder (der Ladeluftweg-Absperreinrichtung)
- 49: Kammer
- 51: Kammer
- 53: Kolben
- 55: Kniehebel
- 57: Übertotpunktfeder
- 59: Hydraulikfluid-Strömungsverbindung
- 59a: erster Pfadabschnitt
- 59b: zweiter Pfadabschnitt
- 61: Drosselvorrichtung
- 63: Bypass
- 65: Rückschlagventil
- 67: Ventil
- 69: Steller
- 71: Hydrauliksteuerkreis
- 73: Proportionalventil
- 75: Wegmesseinrichtung

- A: Ansaugluft

## Patentansprüche

1. Brennkraftmaschine (5) mit parallel arbeitenden Abgasturboladern (1, 3) in Registerschaltung, von welchen einer als Schaltlader über eine Ladeluftweg-Absperreinrichtung (43) mit einem Ladeluftweg-Absperrelement (45) und über eine Abgasweg-Absperreinrichtung (21) zu- und abschaltbar ist, wobei ein anderer als Basislader arbeitet, wobei die Ladeluftweg-Absperreinrichtung (43) zur Einstellung einer definierten Bewegungscharakteristik des Ladeluftweg-Absperrelements (45) eingerichtet ist, welche eine relativ längere Öffnungsstellungs-Einnahmedauer und eine relativ kürzere Schließstellungs-Einnahmedauer des Ladeluftweg-Absperrelements (45) aufweist, wobei das Ladeluftweg-Absperrelement (45) als Luftklappe ausgestaltet ist, wobei das Ladeluftweg-Absperrelement (45) mit dem Öffnen einer Abgasklappe (23) bzw. Anlaufen des Schaltladers ein Druckgefälle bzw. einen Unterdruck, welches bzw. welcher ein Öffnen des Ladeluftweg-Absperrelements (45) verursacht, erfährt, **dadurch gekennzeichnet, dass**
- die Ladeluftweg-Absperreinrichtung (43) eingerichtet ist, ein luftdruckgefällebasiertes Einnehmen einer Öffnungsstellung des Ladeluftweg-Absperrelements (45) aktiv zu verzögern.

2. Brennkraftmaschine (5) nach Anspruch 1,
**dadurch gekennzeichnet, dass**
- die Ladeluftweg-Absperreinrichtung (43) eingerichtet ist, im Rahmen der definierten Bewegungscharakteristik eine betriebspunktabhängige Öffnungscharakteristik des Ladeluftweg-Absperrelements (45) einzustellen.

3. Brennkraftmaschine (5) nach einem der vorhergehenden Ansprüche,
**dadurch gekennzeichnet, dass**
- die Ladeluftweg-Absperreinrichtung (43) eingerichtet ist, im Rahmen der definierten Bewegungscharakteristik eine Öffnungscharakteristik mit einem relativ schnelleren oder relativ langsameren Öffnungsvorgang des Ladeluftweg-Absperrelements (45) einzustellen, und/oder
- die Ladeluftweg-Absperreinrichtung (43) eingerichtet ist, im Rahmen der definierten Bewegungscharakteristik wenigstens eine definierte Teilöffnungsstellung des Ladeluftweg-Absperrelements (45) im Rahmen des Einnehmens einer Öffnungsstellung des Ladeluftweg-Absperrelements (45) einzustellen.

4. Brennkraftmaschine (5) nach einem der vorhergehenden Ansprüche,
**dadurch gekennzeichnet, dass**
- die Ladeluftweg-Absperreinrichtung (43) zu einer hydraulischen Steuerung des Ladeluftweg-Absperrelements (45) eingerichtet ist, wobei die Ladeluftweg-Absperreinrichtung (43) einen kleineren Hydraulikfluid-Durchströmquerschnitt für die Einstellung eines Bewegungsprofils mit einer relativ längeren Öffnungsstellungs-Einnahmedauer des Ladeluftweg-Absperrelements (45) bereitstellt und einen größeren Hydraulikfluid-Durchströmquerschnitt für die Einstellung eines Bewegungsprofils mit einer relativ kürzeren Schließstellungs-Einnahmedauer.

5. Brennkraftmaschine (5) nach einem der vorhergehenden Ansprüche,
**dadurch gekennzeichnet, dass**
- die Ladeluftweg-Absperreinrichtung (43) den kleineren Hydraulikfluid-Durchströmquerschnitt und den größeren Hydraulikfluid-Durchströmquerschnitt in einer Hydraulikfluid-Strömungsverbindung (59) zu einem Steuerzylinder (47) des Ladeluftweg-Absperrelements (45) bildet, insbesondere mittels einer in einer Abströmrichtung zu durchströmenden Drosselvorrichtung (61) bzw. einer Bypassleitung (63) zu der Drosselvorrichtung (61) mit darin in Zuströmrichtung durchströmbar aufgenommenem Rückschlagventil (65).

6. Brennkraftmaschine (5) nach einem der vorhergehenden Ansprüche,
**dadurch gekennzeichnet, dass**
- die Ladeluftweg-Absperreinrichtung (43) eingerichtet ist, Hydraulikfluid wahlweise über einen kleineren Hydraulikfluid-Durchströmquerschnitt für die Einstellung eines Bewegungsprofils mit einem relativ langsameren Öffnungsvorgang des Ladeluftweg-Absperrelements (45) oder einen größeren Hydraulikfluid-Durchströmquerschnitt für die Einstellung eines Bewegungsprofils mit einem relativ schnelleren Öffnungsvorgang zu führen.

7. Brennkraftmaschine (5) nach Anspruch 6,
**dadurch gekennzeichnet, dass**
- die Ladeluftweg-Absperreinrichtung (43) ein Ventil (67) aufweist, über welches Hydraulikfluid seitens eines Steuerzylinders (47) für das Ladeluftweg-Absperrelement (45) in Abhängigkeit der Ventilstellung über eine Drosselvorrichtung (61), einhergehend mit einem relativ langsameren Öffnungsvorgang, oder ungedrosselt, einhergehend mit einem relativ schnelleren Öffnungsvorgang absteuerbar ist.

8. Brennkraftmaschine (5) nach einem der vorhergehenden Ansprüche,
**dadurch gekennzeichnet, dass**
- die Ladeluftweg-Absperreinrichtung (43) einen elektrisch angesteuerten Steller (69) aufweist, welcher für ein Öffnen und Schließen des Ladeluftweg-Absperrelements (45) mit demselben in Wirkverbindung steht, insbesondere einen seitens einer Kontrolleinrichtung der Brennkraftmaschine (5) angesteuerten Steller (69).

9. Brennkraftmaschine (5) nach Anspruch 8,
**dadurch gekennzeichnet, dass**
- der Steller (69) die Einstellung unterschiedlicher Öffnungsgeschwindigkeiten und/oder Positionen des Ladeluftweg-Absperrelements (45) während eines Öffnungsvorgangs ermöglicht, insbesondere eine betriebspunktabhängige Öffnungscharakteristik.

10. Brennkraftmaschine (5) nach einem der vorhergehenden Ansprüche,
**dadurch gekennzeichnet, dass**
- die Ladeluftweg-Absperreinrichtung (43) einen hydraulischen Steuerzylinder (47) aufweist, welcher mit dem Ladeluftweg-Absperrelement (45) zu dessen Steuerung in Wirkverbindung steht, wobei dem Steuerzylinder (47) ein Proportionalventil (73) sowie eine Wegmesseinrichtung (75) zugeordnet ist, welche in Wirkverbund mit dem Steuerzylinder (47) eine definierte Offensteuerung des Ladeluftweg-Absperrelements (45) mit verschiedenen Öffnungsgeschwindigkeiten und Stellungen ermöglichen, insbesondere die Einstellung einer betriebspunktabhängigen Öffnungscharakteristik zur Vermeidung von Laderpumpen.

11. Brennkraftmaschine (5) nach einem der vorhergehenden Ansprüche,
**dadurch gekennzeichnet, dass**
- mit der Ladeluftweg-Absperreinrichtung (43) ein Verhältnis der Öffnungsstellungs-Einnahmedauer des Ladeluftweg-Absperrelements (45) zur Schließstellungs-Einnahmedauer des Absperrelements (45) im Bereich von vorzugsweise 5:1 bis 20:1 einstellbar ist.

12. Brennkraftmaschine (5) nach einem der vorhergehenden Ansprüche,
**dadurch gekennzeichnet, dass**
- mit der Ladeluftweg-Absperreinrichtung (43) eine Öffnungscharakteristik darstellbar ist, bei welcher das Ladeluftweg-Absperrelement (45) kontinuierlich zunehmend stufenlos oder diskontinuierlich öffnet, insbesondere über den gesamten Öffnungsweg.

## Claims

1. An internal combustion engine (5) comprising exhaust gas turbochargers (1, 3), which operate in parallel in register circuit, one of which can be switched on and off as a switching charger via a charge air path blocking device (43) comprising a charge air path blocking element (45), and via an exhaust gas path blocking device (21), wherein another one operates as a base charger, wherein the charge air path blocking device (43) is arranged to adjust a defined movement characteristic of the charge air path blocking element (45), which has a relatively longer duration for occupying the opening position and a relatively shorter duration for occupying the closing position of the charge air path blocking element (45), wherein the charge air path blocking element (45) is configured as an air flap, wherein, with the opening of an exhaust gas flap (23) or start-up of the switching charger, respectively, the charge air path blocking element (45) experiences a pressure drop or a negative pressure, respectively, which causes an opening of the charge air path blocking element (45),
**characterised in that**
- the charge air path blocking device (43) is arranged to actively delay an air pressure drop-based occupying of an opening position of the charge air path blocking element (45).

2. The internal combustion engine (5) according to claim 1,
**characterised in that**
- the charge air path blocking device (43) is arranged to adjust an operating point-dependent opening characteristic of the charge air path blocking element (45) as part of the defined movement characteristic.

3. The internal combustion engine (5) according to any one of the preceding claims,
**characterized in that**
- the charge air path blocking device (43) is arranged to adjust an opening characteristic with a relatively quicker or relatively slower opening procedure of the charge air path blocking element (45) as part of the defined movement characteristic, and/or
- the charge air path blocking device (43) is arranged to adjust, as part of the defined movement characteristic, at least one defined partial opening position of the charge air path blocking element (45) as part of the occupying of an opening position of the charge air path blocking element (45).

4. The internal combustion engine (5) according to any one of the preceding claims,
**characterised in that**
- the charge air path blocking device (43) is arranged for a hydraulic control of the charge air path blocking element (45), wherein the charge air path blocking device (43) provides a smaller hydraulic fluid flow cross section for the adjustment of a movement profile with a relatively longer duration for occupying the opening position of the charge air path blocking element (45), and a larger hydraulic fluid flow cross section for the adjustment of a movement profile with a relatively shorter duration for occupying the closing position.

5. The internal combustion engine (5) according to any one of the preceding claims,
**characterised in that**
- the charge air path blocking device (43) forms the smaller hydraulic fluid flow cross section and the larger hydraulic fluid flow cross section in a hydraulic fluid flow connection (59) to a control cylinder (47) of the charge air path blocking element (45), in particular by means of a throttling device (61) or a bypass line (63), respectively, which is to be flown through in an outflow direction, to the throttling device (61) comprising a check valve (65) accommodated therein so as to be capable of being flown through in the inflow direction.

6. The internal combustion engine (5) according to any one of the preceding claims,
**characterised in that**
- the charge air path blocking device (43) is arranged to carry hydraulic fluid selectively via a smaller hydraulic fluid flow cross section for the adjustment of a movement profile with a relatively slower opening procedure of the charge air path blocking element (45), or a larger hydraulic fluid flow cross section for the adjustment of a movement profile with a relatively quicker opening procedure.

7. The internal combustion engine (5) according to claim 6,
**characterised in that**
- the charge air path blocking device (43) has a valve (67), via which hydraulic fluid on the part of a control cylinder (47) for the charge air path blocking element (45) is discharged depending on the valve position via a throttling device (61), accompanied by a relatively slower opening procedure, or unthrottled, accompanied by a relatively quicker opening procedure.

8. The internal combustion engine (5) according to any one of the preceding claims,
**characterised in that**
- the charge air path blocking device (43) has an electrically controlled regulator (69), which is operatively connected to the charge air path blocking element (45) for an opening and closing thereof, in particular a regulator (69), which is controlled on the part of a control device of the internal combustion engine (5).

9. The internal combustion engine (5) according to claim 8,
**characterised in that**
- the regulator (69) enables the adjustment of different opening speeds and/or positions of the charge air path blocking element (45) during an opening procedure, in particular an operating point-dependent opening characteristic.

10. The internal combustion engine (5) according to any one of the preceding claims,
**characterised in that**
- the charge air path blocking device (43) has a hydraulic control cylinder (47), which is operatively connected to the charge air path blocking element (45) for the control thereof, wherein a proportional valve (73) as well as a distance measuring device (75) is assigned to the control cylinder (47), which, in operative connection with the control cylinder (47), enables a defined opening control of the charge air path blocking element (45) with different opening speeds and positions, in particular the adjustment of an operating point-dependent opening characteristic for avoiding charge pumping.

11. The internal combustion engine (5) according to any one of the preceding claims,
**characterised in that**
- a ratio of the duration for occupying the opening position of the charge air path blocking element (45) to the duration for occupying the closing position of the blocking element (45) can be adjusted by means of the charge air path blocking device (43) in the range of preferably from 5:1 to 20:1.

12. The internal combustion engine (5) according to any one of the preceding claims,
**characterised in that**
- the charge air path blocking device (43) can be used to represent an opening characteristic, in the case of which the charge air path blocking element (45) opens in a continuously increasing stepless manner or discontinuously, in particular along the entire opening path.

## Revendications

1. Moteur à combustion interne (5) avec turbocompresseurs d'échappement (1, 3) fonctionnant en parallèle en circuit de registre, dont l'un peut être actionné et désactionné comme turbocompresseur de commutation par un dispositif de blocage du trajet d'air de suralimentation (43) avec un élément de blocage du trajet d'air de suralimentation (45) et par un dispositif de blocage du trajet d'échappement (21), un autre fonctionnant comme turbocompresseur de base, le dispositif de blocage du trajet d'air de suralimentation (43) étant configuré pour le réglage d'une caractéristique de mouvement définie de l'élément de blocage du trajet d'air de suralimentation (45), laquelle présente un temps d'adoption de la position d'ouverture relativement plus long et un temps d'adoption de la position de fermeture relativement plus court de l'élément de blocage du trajet d'air de suralimentation (45), l'élément de blocage du trajet d'air de suralimentation (45) étant conçu comme clapet d'air, l'élément de blocage du trajet d'air de suralimentation (45) étant soumis, avec l'ouverture d'un clapet d'échappement (23) et/ou la mise en marche du turbocompresseur de commutation, à une chute de pression et/ou une dépression causant une ouverture de l'élément de blocage du trajet d'air de suralimentation (45),
**caractérisé en ce que**
- le dispositif de blocage du trajet d'air de suralimentation (43) est configuré pour retarder activement l'adoption d'une position d'ouverture de l'élément de blocage du trajet d'air de suralimentation (45), basée sur une chute de pression de l'air.

2. Moteur à combustion interne (5) selon la revendication 1,
**caractérisé en ce que**
- le dispositif de blocage du trajet d'air de suralimentation (43) est configuré pour régler, dans le cadre de la caractéristique de mouvement définie, une caractéristique d'ouverture de l'élément de blocage du trajet d'air de suralimentation (45) en fonction du point de fonctionnement.

3. Moteur à combustion interne (5) selon l'une des revendications précédentes,
**caractérisé en ce que**
- le dispositif de blocage du trajet d'air de suralimentation (43) est configuré pour régler, dans le cadre de la caractéristique de mouvement définie, une caractéristique d'ouverture avec un processus d'ouverture relativement plus rapide ou relativement plus lent de l'élément de blocage du trajet d'air de suralimentation (45) et/ou
- le dispositif de blocage du trajet d'air de suralimentation (43) est configuré pour régler, dans le cadre de la caractéristique de mouvement définie, au moins une position d'ouverture partielle définie de l'élément de blocage du trajet d'air de suralimentation (45) dans le cadre de l'adoption d'une position d'ouverture de l'élément de blocage du trajet d'air de suralimentation (45).

4. Moteur à combustion interne (5) selon l'une des revendications précédentes,
**caractérisé en ce que**
- le dispositif de blocage du trajet d'air de suralimentation (43) est configuré pour une commande hydraulique de l'élément de blocage du trajet d'air de suralimentation (45), le dispositif de blocage du trajet d'air de suralimentation (43) fournissant une plus petite section d'écoulement du fluide hydraulique pour le réglage d'un profil de mouvement avec un temps d'adoption de la position d'ouverture relativement plus long de l'élément de blocage du trajet d'air de suralimentation (45) et une plus grande section d'écoulement du fluide hydraulique pour le réglage d'un profil de mouvement avec un temps d'adoption de la position de fermeture relativement plus court.

5. Moteur à combustion interne (5) selon l'une des revendications précédentes,
**caractérisé en ce que**
- le dispositif de blocage du trajet d'air de suralimentation (43) constitue la plus petite section d'écoulement du fluide hydraulique et la plus grande section d'écoulement du fluide hydraulique dans une liaison d'écoulement du fluide hydraulique (59) vers un vérin de commande (47) de l'élément de blocage du trajet d'air de suralimentation (45), en particulier au moyen d'un dispositif d'étranglement (61) qui doit être traversé dans une direction de reflux et/ou d'une ligne de dérivation (63) vers le dispositif d'étranglement (61) avec clapet anti-retour (65) pouvant être traversé dans la direction de l'afflux.

6. Moteur à combustion interne (5) selon l'une des revendications précédentes,
**caractérisé en ce que**
- le dispositif de blocage du trajet d'air de suralimentation (43) est configuré pour guider le fluide hydraulique au choix par une plus petite section d'écoulement du fluide hydraulique pour le réglage d'un profil de mouvement avec un processus d'ouverture relativement plus lent de l'élément de blocage du trajet d'air de suralimentation (45) ou une plus grande section d'écoulement du fluide hydraulique pour le réglage d'un profil de mouvement avec un processus d'ouverture relativement plus rapide.

7. Moteur à combustion interne (5) selon la revendication 6,
**caractérisé en ce que**
- le dispositif de blocage du trajet d'air de suralimentation (43) présente une soupape (67), par laquelle le fluide hydraulique du côté d'un vérin de commande (47) pour l'élément de blocage du trajet d'air de suralimentation (45) peut être désactivé, en fonction de la position de soupape, par un dispositif d'étranglement (61) en association avec un processus d'ouverture relativement plus lent, ou sans étranglement en association avec un processus d'ouverture relativement plus rapide.

8. Moteur à combustion interne (5) selon l'une des revendications précédentes,
**caractérisé en ce que**
- le dispositif de blocage du trajet d'air de suralimentation (43) présente un régulateur (69) à commande électrique, lequel est en liaison active avec l'élément de blocage du trajet d'air de suralimentation (45) pour une ouverture et une fermeture de celui-ci, en particulier un régulateur (69) commandé du côté d'un dispositif de contrôle du moteur à combustion interne (5).

9. Moteur à combustion interne (5) selon la revendication 8,
**caractérisé en ce que**
- le régulateur (69) permet le réglage de différentes vitesses d'ouverture et/ou positions de l'élément de blocage du trajet d'air de suralimentation (45) pendant un processus d'ouverture, en particulier une caractéristique d'ouverture en fonction du point de fonctionnement.

10. Moteur à combustion interne (5) selon l'une des revendications précédentes,
**caractérisé en ce que**
- le dispositif de blocage du trajet d'air de suralimentation (43) présente un vérin de commande (47) hydraulique qui est en liaison active avec l'élément de blocage du trajet d'air de suralimentation (45) pour sa commande, une soupape proportionnelle (73) et un dispositif de mesure de course (75) étant affectés au vérin de commande (47), lesquels permettent, en liaison active avec le vérin de commande (47), une commande ouverte définie de l'élément de blocage du trajet d'air de suralimentation (45) avec des vitesses d'ouverture et des positions différentes, en particulier le réglage d'une caractéristique d'ouverture en fonction du point de fonctionnement pour éviter une surtension des turbocompresseurs.

11. Moteur à combustion interne (5) selon l'une des revendications précédentes,
**caractérisé en ce que**
- le dispositif de blocage du trajet d'air de suralimentation (43) permet de régler un rapport entre le temps d'adoption de la position d'ouverture de l'élément de blocage du trajet d'air de suralimentation (45) et le temps d'adoption de la position de fermeture de l'élément de blocage (45), qui se situe de préférence de 5:1 à 20:1.

12. Moteur à combustion interne (5) selon l'une des revendications précédentes,
**caractérisé en ce que**
- le dispositif de blocage du trajet d'air de suralimentation (43) permet de représenter une caractéristique d'ouverture, pour laquelle l'élément de blocage du trajet d'air de suralimentation (45) s'ouvre progressivement en continu ou s'ouvre en discontinu, en particulier sur toute la course d'ouverture.
